# EUROPÄISCHE PATENTANMELDUNG

(11) **EP 2 192 495 A1**
(43) Veröffentlichungstag der Anmeldung: **02.06.2010**
(21) Anmeldenummer: 08305796.8
(22) Anmeldetag: 11.11.2008
(51) Int. Cl.: G06F 13/16, G06F 5/16

(54) **Verfahren zur Bearbeitung von Daten mittels Dreifach-Pufferung**

(71) Anmelder: Thomson Licensing, 92443 Issy-les-Moulineaux Cedex (FR)
(72) Erfinder: Hütter, Ingo, 30982 Pattensen (DE)
(74) Vertreter: Thies, Stephan

(57) **Zusammenfassung**

Die vorliegende Erfindung betrifft ein Verfahren zur Bearbeitung von Daten. Ein zu bearbeitender Datenblock wird in einem ersten Zeitintervall (t1, t2, t3, ...) in einen Speicherbereich (A, B, C) geschrieben. In einem zweiten Zeitintervall (t2, t3, t4, ...) wird der Datenblock im gleichen Speicherbereich (A, B, C) bearbeitet. Der bearbeitete Datenblock wird in einem dritten Zeitintervall (t3, t4, t5, ...) aus dem gleichen Speicherbereich (A, B, C) zurückgesendet.

## Beschreibung

Die vorliegende Erfindung betrifft ein Verfahren zur Bearbeitung von Daten mittel Dreifach-Pufferung, insbesondere von Daten eines ersten Datenverarbeitungssystems in einem zweiten Datenverarbeitungssystem.

Ein bekanntes Prinzip in der Datenverarbeitung ist das Bereithalten von spezieller Hardware, die bestimmte Datenoperationen, z. B. mathematische Operationen, ausführt. Dies dient der Entlastung des Hauptprozessors (engl. central processing unit (CPU)). In diesem Zusammenhang ergibt sich häufig die Anforderung, dass Daten zwischen verschiedenen Einheiten ausgetauscht werden müssen. Typischerweise werden Daten von einem ersten System zu einem zweiten System transportiert, dort verarbeitet und danach wieder vom zweiten System zum ersten System zurücktransportiert. Spezielle Ausgestaltungen der Systeme bestimmen die Art und Weise, wie die Daten transportiert werden. Der Datentransport kann zum Beispiel über ein Netzwerk oder mittels direktem Speicherzugriff (DMA) erfolgen.

Um eine möglichst hohe Datenverarbeitungsgeschwindigkeit erzielen zu können, ist der Datentransport so organisiert, dass er im Hintergrund stattfindet, während die zuvor übertragenen Daten verarbeitet werden. Dazu werden im zweiten System, dem Zielsystem, zwei Speicherbereiche bereit gehalten. Während die Daten eines der beiden Speicherbereiche verarbeitet werden, werden die nächsten zu verarbeitenden Daten in den anderen Speicherbereich geschrieben.

Diese Daten liegen zur Verarbeitung vor, sobald die Verarbeitung der Daten des anderen Speicherbereichs abgeschlossen ist. Da immer Daten zur Verarbeitung vorliegen, kann das Bearbeitungsmittel effizient ausgelastet werden. Theoretisch entstehen keine Pausen, in denen das Bearbeitungsmittel nicht arbeiten kann, weil es auf Daten warten muss. Dies setzt unter anderem voraus, dass das Datenübertragungsmedium eine genügend hohe Bandbreite hat. Ein solches Verfahren ist dem Fachmann unter dem Namen Double Buffering bekannt.

IBM, Cell Broadband Engine - Programming Tutorial - Version 3.0 zeigt ein Double Buffering Verfahren. Das Verfahren beschreibt den Datentransport in eine Richtung vom ersten System zum Zielsystem. Für den Rücktransport der bereits verarbeiteten Daten vom Zielsystem zum ersten System ist die Implementierung eines zweiten Double Buffering Verfahrens notwendig.

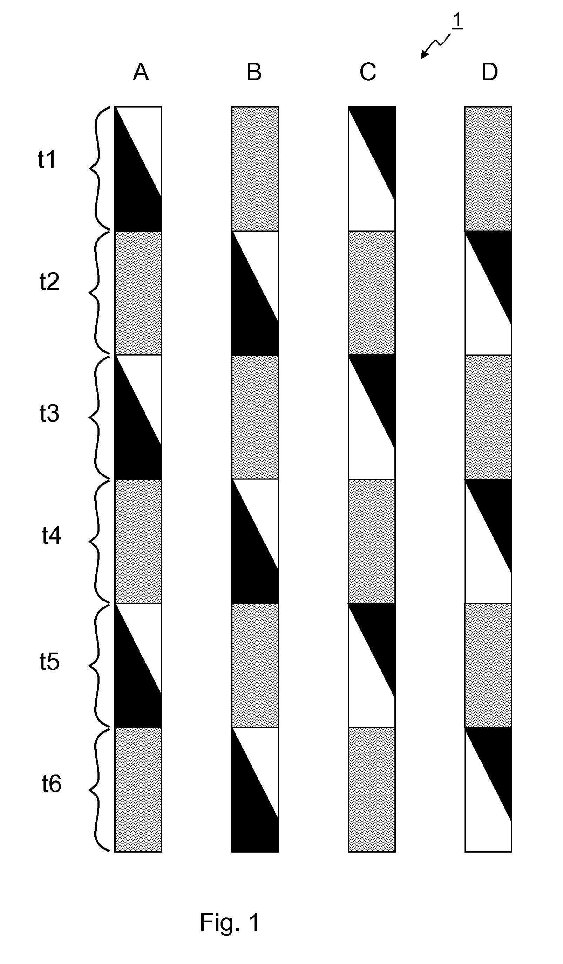

Fig. 1 zeigt eine Anordnung von Speicherbereichen zur Implementierung eines Double Buffering Verfahrens im Zielsystem 1, das einen bidirektionalen Datentransport erlaubt. Dazu werden im Zielsystem 1 vier gleich große Speicherbereiche A, B, C, D vorgehalten. Zwei erste Speicherbereiche A, B bilden den Eingangspuffer und setzen ein Double Buffering Verfahren für den Eingangsdatenstrom um. Zwei zweite Speicherbereiche C, D bilden den Ausgangspuffer und setzen ein Double Buffering Verfahren für die bereits verarbeiteten Daten, den Ausgangsdatenstrom, um. In einem ersten Zeitintervall t1 werden in einem ersten Speicherbereich A des Eingangspuffers A, B Daten empfangen. Dies ist symbolisch durch einen Keil angedeutet, der das Füllen des Speicherbereichs A über das Zeitintervall t1 zeigt. Zu Beginn des Zeitintervalls t1 ist dieser Speicherbereich leer, gegen Ende des Zeitintervalls t1 ist dieser Speicherbereich mit Daten gefüllt. Die schon zuvor in einem zweiten Speicherbereich B des Eingangspuffers A, B empfangenen Daten werden im Zeitintervall t1 in diesem zweiten Speicherbereich B für die Datenverarbeitung vorgehalten. Durch das Zielsystem 1 werden diese Daten verarbeitet und die Ergebnisdaten werden in diesem ersten Zeitintervall t1 in einen zweiten Speicherbereich D des Ausgangspuffers C, D abgelegt. Am Ende des ersten Zeitintervalls t1 liegt das Ergebnis im zweiten Speicherbereich D des Ausgangpuffers C, D vor. Die Speicherbereiche B und D, die in einem Zeitintervall t1 zur Datenverarbeitung vorgehalten werden, sind jeweils durch eine Schraffur graphisch dargestellt. Das Leeren des Speicherbereichs C während des Zeitintervalls t1 ist ebenfalls symbolisch durch einen Keil dargestellt. Zu Beginn des Zeitintervalls t1 ist dieser Speicherbereich mit zurückzusendenden Daten gefüllt, gegen Ende des Zeitintervalls t1 sind die Daten aus dem Speicherbereich C zurückgesendet. Die Darstellungen, die das Leeren und das Füllen der Speicherbereiche andeuten, sind graphisch invertiert. In einem zweiten Zeitintervall t2 werden die verarbeiteten Daten aus dem zweiten Speicherbereich D des Ausgangspuffers C, D an das hier nicht gezeigte erste Datenverarbeitungssystem zurückgeschickt. Zur Aufnahme der im zweiten Zeitintervall t2 verarbeiteten Daten steht nun der erste Speicherbereich C des Ausgangspuffers C, D zur Verfügung. Im Eingangspuffer A, B werden im zweiten Zeitintervall t2 die zur Bearbeitung anstehenden Daten in einem ersten Speicherbereich A vorgehalten, welche im ersten Zeitintervall t1 in diesem Speicherbereich A empfangen wurden. Im zweiten Speicherbereich B des Eingangspuffers A, B werden im zweiten Zeitintervall t2 die Eingangsdaten empfangen. Bei diesem Verfahren steht somit in jedem Zeitintervall im Eingangspuffer A, B jeweils ein Speicherbereich zum Datenempfang und ein Speicherbereich mit zu verarbeitenden Daten zur Verfügung. Im Ausgangspuffer C, D steht in jedem Zeitintervall jeweils ein Speicherbereich zum Rücksenden der bereits bearbeiteten Daten und ein Speicherbereich für die Datenverarbeitung zur Verfügung.

Aufgabe der Erfindung ist es, ein derartiges Verfahren zu verbessern.

Erfindungsgemäß ist vorgesehen, dass ein Verfahren zur Bearbeitung von Daten folgende Schritte ausführt: In einem ersten Zeitintervall wird ein zu verarbeitender Datenblock in einen Speicherbereich geschrieben. In einem zweiten Zeitintervall wird der Datenblock im gleichen Speicherbereich bearbeitet. Zu verarbeitende Daten werden von dort gelesen, und in den selben Speicherbereich werden auch die verarbeiteten Daten geschrieben. In einem dritten Zeitintervall wird der nunmehr bearbeitete Datenblock vom gleichen Speicherbereich aus transferiert. Dieser Speicherbereich steht dann im nächsten Zeitintervall wieder für den Datenempfang zur Verfügung.. Das hat den Vorteil, dass zum Empfang, zur Bearbeitung und zum Transferieren der Daten jeweils nur gleich viele Speicherbereiche notwendig sind. Demgegenüber werden bei einem Double Buffering Verfahren doppelt so viele Speicherbereiche zur Bearbeitung der Daten vorgesehen, als für das Empfangen und Transferieren. Die Daten müssen während des Bearbeitungsschrittes nicht von einem Speicherbereich in einen anderen verschoben werden. Insgesamt erlaubt das erfindungsgemäße Verfahren im Vergleich zum Double Buffering die gleiche Auslastung des Bearbeitungsmittels bei gleichzeitiger Reduzierung der dafür benötigten Speicherbereiche.

Erfindungsgemäß ist vorgesehen, dass drei Speicherbereiche im Speicher zu einer Gruppe von Speicherbereichen gruppiert werden. So wird der verfügbare Speicher übersichtlich strukturiert und nach Bedarf für das Verfahren zur Bearbeitung von Daten verwendet.

Erfindungsgemäß ist vorgesehen, dass bei einem Verfahren zur Bearbeitung von Daten eine oder mehrere Gruppen von Speicherbereichen für das Verfahren genutzt werden. In jedem Zeitintervall wird in einer Gruppe von Speicherbereichen jeweils ein Speicherbereich zum Empfangen, zur Bearbeitung und zum Senden von Daten verwendet. Durch Verwendung von einer oder mehreren Gruppen von Speicherbereichen für die Datenübertragung und Bearbeitung ist das Verfahren flexibel und kann für die jeweiligen Aufgaben hinsichtlich verfügbarem und gefordertem Speicher angepasst werden. Das Verfahren ist universell. In jeder Gruppe von Speicherbereichen jeweils einen Speicherbereich zum Empfangen, zur Bearbeitung und zum Transferieren von Daten zu verwenden hat den Vorteil, dass die Anzahl notwendiger Speicherbereiche reduziert wird, da in jedem Zeitintervall in einer Gruppe von Speicherbereichen jeweils nur ein Datenblock zum Vorhalten von Daten vorgesehen ist. Eine solche Gliederung ermöglicht dennoch den bidirektionalen Datenaustausch.

Vorteilhafterweise wird das erfindungsgemäße Verfahren in der Bildverarbeitung angewendet. Bei der Bildverarbeitung, insbesondere bei der Echtzeitverarbeitung von hochaufgelösten Videobildern, werden große Datenmengen übertragen. Diese Anwendung stellt hohe Anforderungen an den Speicherbedarf und die Rechenleistung des Bearbeitungsmittels. Die Verringerung der Wartezeit oder die Verringerung des Speicherbedarfs des Bearbeitungsmittels wirkt sich bei dieser Anwendung in besonders vorteilhafter Weise aus.

Erfindungsgemäß ist vorgesehen, dass bei einem Verfahren zur Bearbeitung von Daten während des Schrittes des Bearbeitens eines Datenblocks ein Algorithmus verwendet wird, der nicht wahlfrei auf bereits zuvor verarbeitet Daten zugreifen muss. Bei einem solchen Algorithmus ist das Vorhalten von jeweils einem Speicherbereich für die Ausgangsdaten und das Ergebnis somit nicht notwendig, das heißt, bereits im Algorithmus benutze Daten können im Speicher mit den Ergebnisdaten überschieben werden. Benötigt der Algorithmus einen deterministischen Zugriff auf einzelne zuvor verarbeitete Daten (z. B. bei einem digitalen horizontalen Filter), so können diese Werte zwischengespeichert werden und stehen dem Algorithmus daher trotz Überschreibens der ursprünglichen Daten noch zur Verfügung.

Erfindungsgemäß ist vorgesehen, dass bei einem Verfahren zur Bearbeitung von Daten eines ersten Datenverarbeitungssystems in einem zweiten Datenverarbeitungssystem in einem ersten Zeitintervall Daten in einen Speicherbereich des zweiten Datenverarbeitungssystems geschrieben werden. In einem zweiten Zeitintervall werden die Daten im gleichen Speicherbereich des zweiten Datenverarbeitungssystems bearbeitet. In einem dritten Zeitintervall werden die Daten aus diesem Speicherbereich des zweiten Datenverarbeitungssystems an das erste Datenverarbeitungssystem zurückgesendet. Die Verwendung des erfindungsgemäßen Verfahrens für das Bearbeiten von Daten in einem zweiten Datenverarbeitungssystem, wobei die Daten von einem ersten Datenverarbeitungssystem kommen und die Ergebnisdaten wieder an dieses zurückgesendet werden, nutzt den Vorteil des vorgeschlagenen Verfahrens und ermöglicht eine bidirektionale Datenkommunikation zwischen dem ersten Datenverarbeitungssystem und dem zweiten Datenverarbeitungssystem mit einer reduzierten Speicheranforderung im zweiten Datenverarbeitungssystem.

Erfindungsgemäß ist vorgesehen, dass bei einem Verfahren zur Bearbeitung von Daten das zweite Datenverarbeitungssystem ein Subsystem des ersten Datenverarbeitungssystems ist. Zwischen einem Hauptsystem und einem Subsystem findet häufiger Datenaustausch statt. Deshalb ist es hier eine besondere Anforderung, das Subsystem bei geringstmöglicher Speicheranforderungen bestmöglich auszulasten.

Erfindungsgemäß ist vorgesehen, dass bei einem Verfahren zur Bearbeitung von Daten das erste Datenverarbeitungssystem ein Hauptprozessor und das zweite Datenverarbeitungssystem ein Co-Prozessor ist. Im IBM, Cell Broadband Engine - Programming Tutorial - Version 3.0 entspricht der Hauptprozessor einem PowerPC Processor Element (PPE) und der Co-Prozessor einem Synergistic Processor Element (SPE).

Erfindungsgemäß ist die Implementierung des Verfahrens zur Bearbeitung von Daten in mehreren Co-Prozessoren vorgesehen, die alle dem gleichen Hauptprozessor zugeordnet sind.

Des Weiteren betrifft die Erfindung die Verwendung eines an sich bekannten Speichers zur Ausführung eines erfindungsgemäßen Verfahrens.

Des Weiteren betrifft die Erfindung ein Datenverarbeitungssystem, das ein erfindungsgemäßes Verfahren ausführt oder einen erfindungsgemäßen Speicher enthält.

Vorteile der Erfindung sind auch der nachfolgenden Beschreibung eines Ausführungsbeispiels zu entnehmen. Es versteht sich, dass auch andere als die explizit angegeben Kombinationen und im Rahmen des fachmännischen Handelns liegende Abwandlungen ebenfalls im Rahmen der Erfindung liegen.

Es zeigen
- Fig. 1: Ein bekanntes Verfahren zum bidirektionalen Datenaustausch und dessen Speicheranforderung im Subsystem
- Fig. 2: Das erfindungsgemäße Verfahren zum bidirektionalen Datenaustausch und dessen reduzierte Speicheranforderung im Subsystem
- Fig. 3: Die Zuordnung von Speicherbereichen eines Speichers gemäß dem erfindungsgemäßen Verfahren

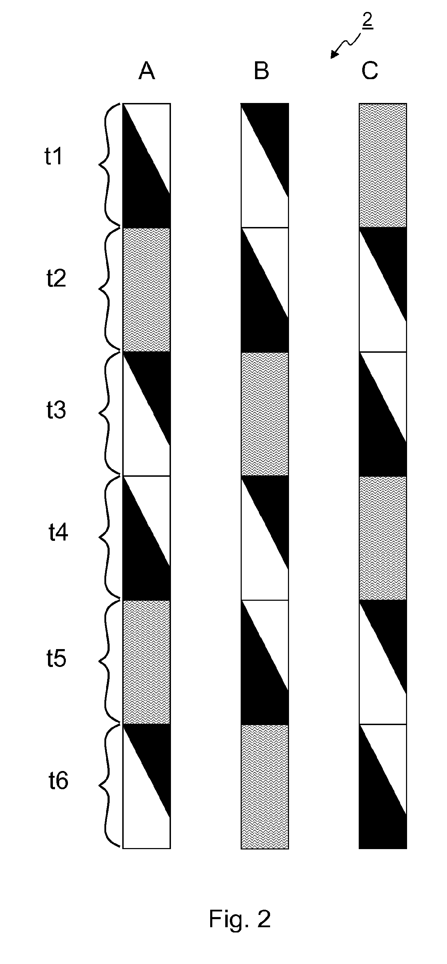

Fig. 2 zeigt eine Anordnung von Speicherbereichen zur Implementierung des erfindungsgemäßen Verfahrens für den bidirektionalen Datenaustausch zwischen einem ersten Datenverarbeitungssystem und einem Zielsystem 2 mittels Dreifach-Pufferung im Zielsystem 2. Dazu werden im Zielsystem 2 drei Speicherbereiche A, B, C vorgehalten. Die funktionale Verwendung jedes Speicherbereichs A, B, C ändert sich für jedes Zeitintervall t1, t2, ... ,t5, t6. Für jedes Zeitintervall, dessen Länge sich typischerweise aus der Dauer, die zur Bearbeitung der Daten benötigt wird, ergibt, ist grafisch dargestellt, wie die Speicherbereiche im jeweiligen Zeitintervall t1, t2, ... ,t5, t6 benutzt werden. Im ersten Zeitintervall t1 werden Daten im ersten Speicherbereich A empfangen. Im zweiten Zeitintervall t2 werden diese Daten im ersten Speicherbereich A verarbeitet. Im dritten Zeitintervall t3 werden die Daten aus dem ersten Speicherbereich A an das erste Datenverarbeitungssystem zurückgesendet. In den beiden anderen Speicherbereichen B, C findet die gleiche Rotation der Aufgaben statt, die mit Hilfe der Speicherbereiche B, C ausgeführt werden. Diese Rotation findet um ein Zeitintervall versetzt statt, so dass in jedem Zeitintervall t1, t2, ... ,t5 , t6 genau ein Speicherbereich A, B, C zum Empfangen von Daten, zum Bearbeiten der Daten und zum Zurücksenden der Daten vorgehalten wird.

Werden mehrere Gruppen von jeweils drei Speicherbereichen verwendet, findet eine Rotation analog statt. Es stehen auch dann immer gleich viele Speicherbereiche zum Empfangen von Daten, zum Bearbeiten der Daten und zum Zurücksenden der Daten bereit.

Der Begriff Dreifach-Pufferung ist dem Fachmann auch aus der Herstellung von Grafikkarten bekannt. In diesem Zusammenhang ist das zur Verfügungstellen von drei Speichern gemeint. Dabei hält ein Speicher in einem Zeitintervall das aktuell angezeigte Bild bereit, ein zweiter Speicher hält in diesem Zeitintervall das Bild für das nächste Zeitintervall bereit. Ein dritter Speicher empfängt in diesem Zeitintervall das Bild für das übernächste Zeitintervall. Das ermöglicht, dass die anzuzeigenden Bilddaten immer während der Rücksprungphase des Lichtstrahls geändert werden, um somit ein ruckelfreies Bild wiedergeben zu können. Im Gegensatz zum erfindungsgemäßen Verfahren handelt es sich dabei nicht um ein bidirektionales Verfahren.

Beim erfindungsgemäßen Verfahren der Dreifach-Pufferung erfüllt jeder Speicherbereich drei Aufgaben in jeweils verschiedenen Zeitintervallen. Jeder Speicherbereich wird zum Senden, zum Bearbeiten und zum Transferieren von Daten benutzt. In einem Double Buffering Verfahren, wie es aus dem Stand der Technik bekannt ist, erfüllt ein Speicherbereich zwei Aufgaben. Speicherbereiche werden entweder zum Empfangen von Daten und zum Bearbeiten der Daten eingesetzt. Andere Speicherbereiche werden zum Bearbeiten der Daten und zum Transferieren von Daten eingesetzt.

In anderen Worten betrifft die vorliegende Erfindung ein Verfahren zur Bearbeitung von Daten. Ein zu bearbeitender Datenblock wird in einem ersten Zeitintervall t1, t2, t3, ... in einen Speicherbereich A, B, C geschrieben. In einem zweiten Zeitintervall t2, t3, t4, ... wird der Datenblock im gleichen Speicherbereich A, B, C bearbeitet. Der bearbeitete Datenblock wird in einem dritten Zeitintervall t3, t4, t5, ... aus dem gleichen Speicherbereich A, B, C zurückgesendet.

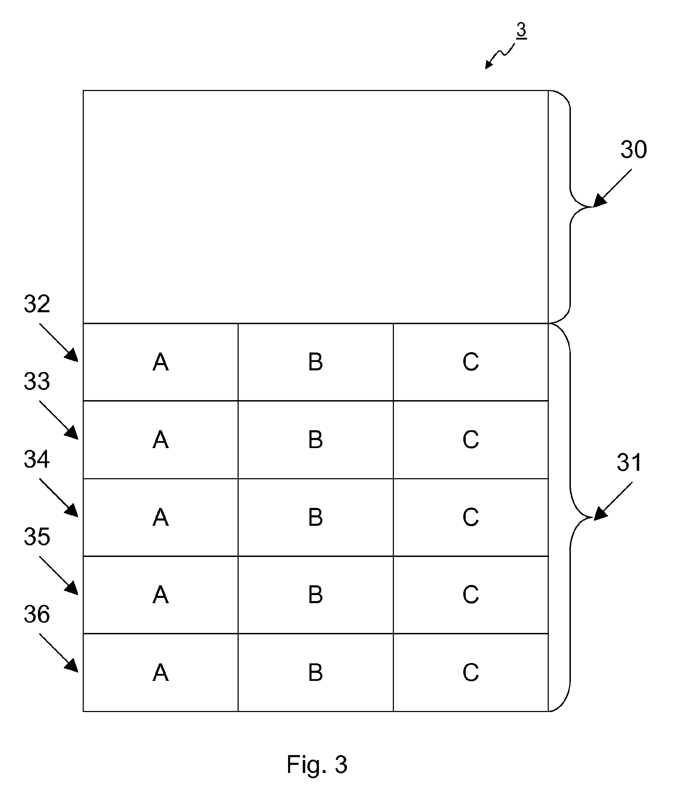

Fig. 3 zeigt schematisch die Aufteilung eines Speichers 3 eines Zielsystems 2. Ein Teil 31 des Speichers 3 wird für die bidirektionale Datenübertragung zwischen Zielsystem 2 und erstem Datenverarbeitungssystem verwendet, ein anderer Teil 30 des Speichers 3 wird für andere Aufgaben verwendet. Der Speicherbereich 31, der für die bidirektionale Datenübertragung verwendet wird, ist in Gruppen 32, 33, 34, ... von Speicherbereichen A, B, C aufgeteilt. Jede Gruppe 32, 33, 34, ... besteht aus drei gleich großen Speicherbereichen A, B, C, mit denen das erfindungsgemäße Verfahren ausgeführt wird. Mit dieser Aufteilung können mehrere bidirektionale Datenübertragungen gleichzeitig gemäß dem erfindungsgemäßen Verfahren erfolgen, für die jeweils eine oder mehrere Gruppen 32, 33, 34, ... von Speicherbereichen A, B, C eingesetzt werden. Für eine bidirektionale Datenübertragung können mehrere Gruppen 32, 33, 34, ... von Speicherbereichen A, B, C zusammengefasst werden. Der Kapazität des Speichers, der jeweils zum Empfangen von Daten, zum Verarbeiten von Daten und zum Zurücksenden der Daten für diese bidirektionale Datenübertragung bereit steht, erhöht entsprechend der Anzahl von Gruppen 32, 33, 34, ... von Speicherbereichen A, B, C, die für diese Datenübertragung verwendet werden.

## Patentansprüche

1. Verfahren zur Bearbeitung von Daten, wobei ein zu bearbeitender Datenblock
- in einem ersten Zeitintervall (t1) in einen Speicherbereich geschrieben wird, und
- in einem zweiten Zeitintervall (t2) im gleichen Speicherbereich bearbeitet wird, **dadurch gekennzeichnet dass** der bearbeitete Datenblock in einem dritten Zeitintervall (t3) aus dem gleichen Speicherbereich transferiert wird.

2. Verfahren gemäß Anspruch 1, **dadurch gekennzeichnet dass** drei Speicherbereiche im Speicher zu einer Gruppe von Speicherbereichen gruppiert werden.

3. Verfahren gemäß Anspruch 2, **dadurch gekennzeichnet dass**
- eine oder mehrere Gruppen von Speicherbereichen für das Verfahren genutzt werden, und
- in jedem Zeitintervall (t1, t2, ..., t6) in einer Gruppe von Speicherbereichen jeweils ein Speicherbereich zum Empfangen, zur Bearbeitung und zum Transferieren von Daten verwendet wird.

4. Verfahren gemäß einem der Ansprüche 1-3, **dadurch gekennzeichnet dass** das Verfahren zur Bildverarbeitung verwendet wird.

5. Verfahren gemäß einem der Ansprüche 1-4, **dadurch gekennzeichnet dass** während des Schrittes des Bearbeitens eines Datenblocks ein Algorithmus ausführt wird, der nicht wahlfrei auf bereits verarbeitete Daten zugreift.

6. Verfahren gemäß einem der Ansprüche 1-5, **dadurch gekennzeichnet dass** Daten eines ersten Datenverarbeitungssystem in einem zweiten Datenverarbeitungssystem verarbeitet werden, wobei ein zu bearbeitender Datenblock
- in einem ersten Zeitintervall (t1) in einen Speicherbereich des zweiten Datenverarbeitungssystems geschrieben wird,
- in einem zweiten Zeitintervall (t2) im gleichen Speicherbereich des zweiten Datenverarbeitungssystems bearbeitet wird, und
- in einem dritten Zeitintervall (t3) aus diesem Speicherbereich des zweiten Datenverarbeitungssystems an das erste Datenverarbeitungssystem zurückgesendet wird.

7. Verfahren gemäß Anspruch 6, **dadurch gekennzeichnet dass** das zweite Datenverarbeitungssystem ein Subsystem des ersten Datenverarbeitungssystems ist.

8. Verfahren gemäß Anspruch 6 oder 7, **dadurch gekennzeichnet dass** das erste Datenverarbeitungssystem ein Hauptprozessor ist und das zweite Datenverarbeitungssystem ein Co-Prozessor ist.

9. Verfahren gemäß einem der Ansprüche 6 - 8, **dadurch gekennzeichnet dass** das erste Datenverarbeitungssystem ein PowerPC Processor Element ist und das zweite Datenverarbeitungssystem ein Synergisitc Processor Element ist.

10. Speicher, **dadurch gekennzeichnet dass** er zur Ausführung eines Verfahrens gemäß der Ansprüche 1-9 genutzt wird.

11. Datenverarbeitungssystem, **dadurch gekennzeichnet dass** es ein Verfahren gemäß einem der Ansprüche 1-9 ausführt oder einen Speicher gemäß Anspruch 10 enthält.
